(19) Europäisches Patentamt
European Patent Office
Office européen des brevets

(11) Veröffentlichungsnummer: **0 468 276 A1**

(12) **EUROPÄISCHE PATENTANMELDUNG**

(21) Anmeldenummer: **91111465.0**

(51) Int. Cl.$^5$: **B32B 27/08**, B32B 31/30

(22) Anmeldetag: **10.07.91**

(30) Priorität: **21.07.90 DE 9010873 U**

(43) Veröffentlichungstag der Anmeldung:
**29.01.92 Patentblatt 92/05**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Szigeti, Peter Rudolf, Dr.**
**Waldstrasse 20**
**W-6087 Büttelborn(DE)**
Erfinder: **Schreyer, Günther, Dr.**
**Pfannmüllerweg 24**
**W-6100 Darmstadt(DE)**
Erfinder: **Diroll, Otto**
**Kiesstrasse 46**
**W-6100 Darmstadt(DE)**
Erfinder: **Hofmann, Klaus**
**Hahlgartenstrasse 69**
**W-6103 Griesheim(DE)**
Erfinder: **Lorenz, Hans**
**Brentanostrasse 16**
**W-6100 Darmstadt(DE)**

(54) **Kunststoff-Laminat aus aromatischem Polyetherimid und aromatischem Polyethersulfon.**

(57) Coextrudierte Kunststoff-Laminate aus einer Kernschicht aus einem aromatischen Polyetherimid oder dessen Gemisch mit höchstens 40 Gew.-% eines damit verträglichen thermoplastischen Polymermaterials und beiderseits der Kernschicht haftend verbundenen Deckschichten aus einem aromatischen Polyethersulfon zeichnen sich durch flammhemmende Eigenschaften und überraschend hohe Reißdehnungswerte aus. Sie können mit einer Oberflächenstruktur versehen und ohne Verlust dieser Struktur im thermisch erweichten Zustand verformt werden.

EP 0 468 276 A1

Die Erfindung betrifft ein neues Kunststoff-Laminat mit flammhemmenden Eigenschaften aus einem aromatischem Polyetherimid und einem aromatischem Polyethersulfon. Die genannten Kunststoffe gehören zu einer Gruppe von aromatischen Polymeren, die als Konstruktions-Kunststoffe oder englisch als "engineering plastics" bezeichnet werden. Sie zeichnen sich durch thermoplastische Verformbarkeit, hohe Wärmebeständigkeit, gute Schlagzähigkeit und hohe Festigkeitswerte aus, unterscheiden sich jedoch in ihrem Brandverhalten, z.B. in ihren flammhemmenden Eigenschaften.

## Stand der Technik

Ein bevorzugtes Anwendungsgebiet der Konstruktions-Kunststoffe liegt in der Extrusion von flachen Kunststoffbahnen mit einer gleichmäßigen Dicke von etwa 1 bis 5 mm. Sie lassen sich im thermisch erweichten Zustand zu dreidimensionalen Formkörpern umformen, die beispielsweise als Innenauskleidung von Fahrzeugen, Schiffen oder Flugzeugen verwendet werden. Für diese Anwendungen ist eine mattierte Oberfläche erwünscht. Die Bahnen werden daher unmittelbar nach der Extrusion durch einen Prägekalander geführt, wo mittels einer Mattierungswalze eine körnige Mattstruktur erzeugt wird. Diese Struktur soll bei der Umformung erhalten bleiben.

Diese Voraussetzung erfüllen aromatische Polyethersulfone. Sie lassen sich unter Bedingungen umformen, unter denen die Mattstruktur der Oberfläche nicht verlorengeht. Die Reißdehnung der aromatischen Polyethersulfone läßt allerdings für manche Anwendungen zu wünschen übrig.

Eine wichtige Voraussetzung für die Anwendung dieser Kunststoffe im Flugzeugbau ist die Erfüllung der Brandanforderungen gemäß dem OSU-Test (Ohio State University). Er verlangt ab August 1990, daß eine Wärmefreisetzungsgeschwindigkeit von 65 kW min/$m^2$ und eine Wärmeentwicklung von 65 kW/qm innerhalb der ersten 2 Minuten der Brandbelastung nicht überschritten werden; diese Meßwerte werden mit HR und HRR bezeichnet.

Die aromatischen Polyethersulfone erfüllen in reiner Form den OSU-Brandtest nicht. Um dieser Norm zu genügen, müssen sie mit flammhemmenden Zusätzen vermischt werden, die sich in der Regel nachteilig auf die Gebrauchseigenschaften auswirken.

Aromatische Polyetherimide sind ohne besondere Zusätze flammhemmend im Sinne des OSU-Brandtests, sind jedoch für viele Anwendungszwecke zu spröde. Sie werden deshalb manchmal mit zäheren, damit verträglichen Polymeren abgemischt und erhalten dadurch eine verbesserte Schlagzähigkeit, jedoch haben solche Mischungen eine unbefriedigende Reißdehnung. Der OSU-Test wird auch von einigen Mischungen dieser Art erfüllt. Es hat sich gezeigt, daß bei der thermischen Umformung von Bahnen aus diesen Kunststoffen die eingeprägte körnige Oberflächenstruktur nicht erhalten bleibt, sondern die Oberfläche glatt und glänzend wird, was unerwünscht ist. Die erforderliche Mattstruktur muß daher in einem nachträglichen Arbeitsgang durch Aufbringen eines Mattlackes erzeugt werden.

Aus der EP-A 195 229 und der US-A 4 576 842 ist es bekannt, zwei verschiedene Konstruktions-Kunststoffe, die sich in ihren zulässigen Gebrauchstemperaturen unterscheiden, durch Coextrusion zu dreischichtigen Laminaten zu verarbeiten. Aus diesen Laminaten werden durch thermische Umformung wärmebeständige Küchengeschirre hergestellt. In manchen Fällen wird es bevorzugt, daß die innere Schicht des Laminats eine höhere zulässige Gebrauchstemperatur als die äußeren Schichten hat, in anderen Fällen umgekehrt. Zu den als geeignet genannten Konstruktions-Kunststoffen gehören auch Polyethersulfone und Polyetherimide, die alternativ als Kernschichtmaterial verwendet werden. Laminate, die diese beiden Kunststoffe gemeinsam enthalten, sind nicht bekannt.

## Aufgabe und Lösung

Der Erfindung liegt die Aufgabe zugrunde, eine extrudierte Kunststoffbahn aus Konstruktions-Kunststoff mit flammhemmenden Eigenschaften und guten mechanischen Eigenschaften, vor allem hoher Reißdehnung und Zähigkeit zu schaffen, die mit einer Oberflächenstruktur versehen und ohne Verlust dieser Struktur im thermisch erweichten Zustand verformt werden kann.

Die Aufgabe wird erfindungsgemäß durch ein Kunststoff-Laminat, gekennzeichnet durch eine Kernschicht aus einem aromatischen Polyetherimid oder dessen Gemisch mit höchstens 40 Gew.-% eines damit verträglichen Polymermaterials und beiderseits der Kernschicht haftend verbundenen Deckschichten aus einem aromatischen Polyethersulfon gelöst.

## Vorteile der neuen Laminate

Die neuen Laminate sind unter Erhalt ihrer Oberflächenstruktur im thermisch erweichten Zustand

umformbar. Überraschend sind die hohen Reißdehnungswerte, die über diejenigen der beteiligten Kunststoffe selbst hinausgehen können. Reines handelsübliches Polyetherimid (Ultem 1000, Warenzeichen der General Electric Co) hat in Form extrudierter Bahnen eine Zugfestigkeit von 110 bis 117 MPa und eine Reißdehnung von 29 bis 46 %. Bei Abmischung mit einem Poly-(Imid-Siloxan)-Blockcoplymer (Ultem 1668, Warenzeichen der General Electric Co) sinkt die Zugfestigkeit auf 92 bis 102 MPa und die Reißdehnung auf 19 bis 39 %. An einem erfindungsgemäßen coextrudierten Laminat, das auf einer Kernschicht aus der genannten Abmischung beidseitig 0,2 mm dicke Deckschichten aus aromatischem Polyethersulfon trägt, wurden eine Zugfestigkeit von 97 MPa und eine Reißdehnung von 67% gemessen. Noch noch stärker wirken sich derartige Deckschichten bei Verwendung des reinen Polyetherimids als Kernmaterial auf die Eigenschaften der Kunststoffbahn aus. Durch Coextrusion mit 0,2 mm dicken Deckschichten aus Polyethersulfon steigt die Reißdehnung von 30 bis 45 für das Kernmaterial allein auf den erstaunlich hohen Wert von 90 bis 105 % für das Coextrudat. Ebenso steigt die Gardner-Schlagzähigkeit von 1 auf über 18 Joule an.

Die neuen Laminate erfüllen den OSU-Brandtest weitgehend. An erfindungsgemäßen PEI/PES-Laminaten wurden ein HR-Wert von 19 und ein HRR-Wert von 73 gefunden. Bei Abmischung des Polyetherimids mit einem Poly-(Imid/Siloxan)-Blockcopolymer verminderten sich die HR/HRR-Werte auf 9-19/29-37.

**Ausführung der Erfindung**

Wesentlicher Bestandteil der Kernschicht ist ein aromatisches Polyetherimid. Für die Erfindung geeignete aromatische Polyetherimide sind aus den US-Patentschriften 3 847 867, 3 838 097 und 4 107 147 bekannt. Sie sind aus wiederkehrenden Einheiten der allgemeinen Formel I aufgebaut.

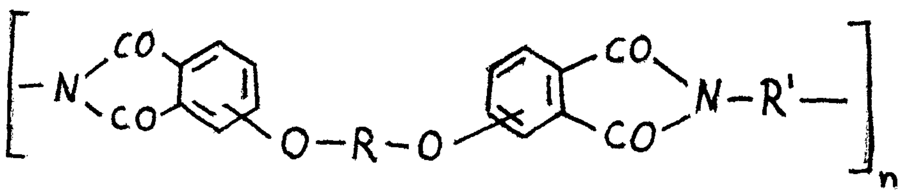
I

Der Polymerisationsgrad n liegt vorzugsweise im Bereich von 10 bis 10 000 oder gegebenenfalls darüber. R bezeichnet einen bifunktionellen aromatischen Rest, der über Ethersauerstoffatome m- bzw. p-ständig an die Phthalimideinheiten gebunden ist. R kann auch aus mehreren, durch eine Einfachbindung oder durch Heteroatome, wie -O-, -S-, oder durch $-SO_2$-Gruppen oder Akylengruppen, wie Methylen oder 2,2-Propylen, vorzugsweise in p,p'-Stellung verbundenen aromatischen Kernen bestehen. Die Imidstickstoffatome sind durch gleichartige aromatische Reste R', die jedoch von R verschieden sein können, verknüpft. Die Herstellung der aromatischen Polyetherimide ist allgemein bekannt. Besonders bevorzugt ist ein Polymer aus wiederkehrenden Einheiten der Formel II.

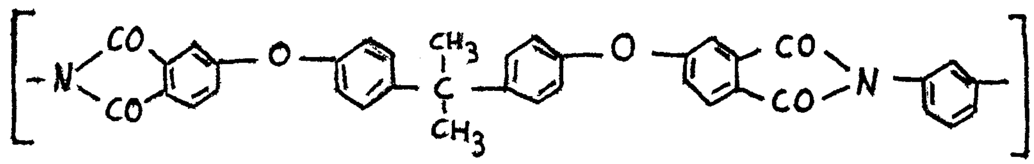
II

Zur Verbesserung der Schlagzähigkeit und anderer Eigenschaften können die Polyetherimide mit einem anderen, damit coextrudierbaren Polymermaterial höherer Zähigkeit vermischt werden. Solche Mischungen werden hergestellt, indem man die beiden Kunststoffe in einen Extruder einbringt und in der Schmelze innig vermischt. Der Anteil der Abmischkomponente wird so klein wie möglich gehalten, um die flammhemmenden Eigenschaften des Polyetherimids zu erhalten, muß jedoch groß genug sein, um die erforderliche Verbesserung der Zähigkeitseigenschaften zu erreichen. Eine Schlagzähigkeit von 12 bis 18 Joule im Gardner-Test (nach ASTM D 3029-82n) ist ausreichend. In der Regel werden Zusatzmengen von etwa 10 bis 50 Gew.-%, bezogen auf das Gewicht der Mischung verwendet.

Geeignete verträgliche thermoplastische Polymermaterialien mit höherer Zähigkeit sind z.B. aromatische Polycarbonate und aromatische Poly-(Imid-Siloxan)-Blockcopolymere. Unter den aromatischen Polycarbonaten sind die Abkömmlinge des Bisphenols A besonders bevorzugt. Weitere Polycarbonat-Kunststoffe leiten sich von anderen dihydrischen Phenolen ab, z.B. von Bis-(4-hydroxyphenyl)-methan, 2,2-Bis-(4-hydroxy-3-methylphenyl)-propan, 4,4-bis-(4-hydroxyphenyl)-heptan. Aus US-A 2 999 835, 3 028 365 und 3 334 154 sind weitere Polycarbonat-Kunststoffe bekannt.

Aromatische Poly-(Imid-Siloxan)-Blockcopolymere sind aus EP-A 273 150 bekannt. Sie lassen sich durch die Formel III beschreiben,

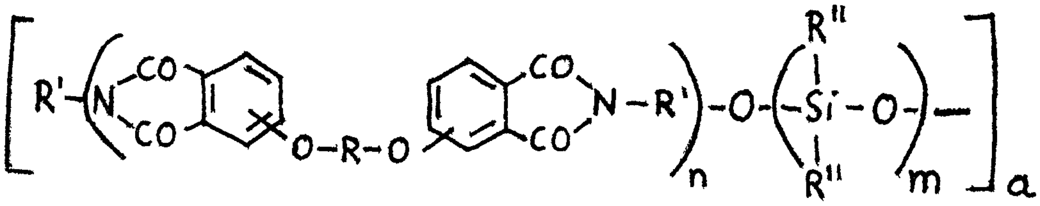 III

worin n und m die Polymerisationgrade der beteiligten Polyetherimid- und Polysiloxan-Blöcke bedeuten; sie können Werte von 1 bis 50 haben. a bezeichnet die Anzahl der beiden Blöcke und kann Werte zwischen 1 und 10 000 haben. R und R' sind bifunktionelle aromatische Reste, die die gleiche Struktur wie in Formel I haben können. R" sind aliphatische oder aromatische Reste wie Methyl, Phenyl, Cyanethyl oder Trifluormethylethyl.

Zur Bildung der Deckschichten werden aromatische Polyethersulfone mit einer zur Extrusion geeigneten Schmelzviskosität verwendet; der MFI-Wert (melt flow index) bei 360°C liegt z.B. bei etwa 30 $cm^3/10$ min.

Sie sind aus wiederkehrenden Einheiten der allgemeinen Strukturformel

$$- (Ar - SO_2 - Ar - O)_n -$$

aufgebaut, worin Ar einen bifunktionellen, ein- oder mehrkernigen aromatischen Rest bedeutet. Vorzugsweise bestehen die Reste Ar aus p-Phenylengruppen, die gegebenenfalls Substituenten, wie niedere Alkylgruppen oder Cycloalkylgruppen, tragen können. Mehrkernige Reste Ar enthalten beispielsweise zwei derartige Phenylengruppen, die durch eine Einfachbindung oder durch ein Sauerstoff- oder Schwefelatom oder durch $SO_2$-, Methylen- oder Isopropyliden-Gruppen verknüpft sein können. Gegebenenfalls können die aromatischen Polyethersulfone mit flammhemmenden Zusätzen oder ähnlichen Hilfsstoffen modifiziert sein.

Die neuen Laminate werden in an sich bekannter Weise durch Coextrusion des Kern- und des Deckschichtmaterials erzeugt. Die Materialien werden in getrennten Extrudern aufgeschmolzen und in einen Coextrusionadapter eingeleitet, wo sie zu einem dreischichtigen Strang zusammengeführt werden. Dieser wird bei Temperaturen von etwa 300 bis 380°C aus einer Schlitzdüse in Form einer flachen Bahn von gleichmäßiger Dicke extrudiert. Sie kann z.B. 500 bis 2500 mm breit sein. Die gesamte Dicke der Bahn kann 1 bis 5, vorzugsweise 1 bis 3 mm betragen. Davon entfallen jeweils 0,05 - 0,5 mm, vorzugsweise 0,2 bis 0,5 mm auf die Deckschichten. Wenn diese relativ dünn, z.B. weniger als 0,2 mm dick sind, werden die verbesserten Festigkeitswerte nicht immer erreicht. Bei Deckschichten größerer Dicke besteht die Gefahr, daß der OSU-Brandtest nicht erfüllt wird. Die neuen Laminate bestehen somit zu etwa 60 bis 80 Gew.-% aus dem Kernmaterial und zu 20 bis 40 Gew.-% aus dem Deckschichtmaterial. Es soll nicht unerwähnt bleiben, daß mit diesem Aufbau in vielen Fällen eine Kostenersparnis gegenüber einer gleichdicken Bahn aus dem reinen Kernmaterial erreicht wird, da die Polyethersulfone in der Regel billiger als die modifizierten Polyetherimide sind.

Wenn eine Oberflächenstruktur erwünscht ist, kann man die extrusionswarme mehrschichtige Bahn unmittelbar nach der Coextrusion durch einen Prägekalander führen, wo die Oberflächenstruktur der Prägewalze auf der Oberfläche der Bahn abgeformt und durch Abkühlung unter die Erweichungstemperatur stabilisiert wird. Vorzugsweise wird mittels einer Mattierungswalze eine körnige Mattstruktur erzeugt. In der Regel genügt es, wenn eine der Deckschichten in dieser Weise strukturiert wird.

## Umformen des Kunststofflaminats

Dreidimensional gestaltete Formteile, wie Elemente für Flugzeuginnenverkleidungen, lassen sich aus den erfindungsgemäßen Laminaten in Vakuumformmaschinen mit Hilfe von Positivwerkzeugen erzeugen. Dabei wird vorzugsweise die Rückseite des Laminats an die Werkzeugoberfläche angelegt, während die strukturierte Vorderseite frei liegt. Die Umformung an Negativwerkzeugen mit strukturierter Oberfläche ist möglich, aber weniger gebräuchlich.

Zur Umformung wird das Laminat auf 270 bis 300 °C erwärmt. Dazu eignet sich eine aus Ober- und

Unterheizung bestehende Heizstation. Die thermoelastisch erweichte Bahn wird dann in einem am Rand angreifenden Spannrahmen über das Werkzeug geführt und mittels Vakuum an dessen Oberfläche angelegt. Um eine genaue Detailabformung zu gewährleisten, kann es zweckmäßig sein, das Werkzeug zu beheizen. Nach Abkühlung unter die Erweichungstemperatur wird belüftet und das Formteil abgenommen.

## BEISPIELE

### Ausführungsbeispiel 1

Ungefärbte handelsübliche Polyetherimid-Extrusionsformmasse (Handelsbezeichnung "Ultem 1000", WZ der General Electric Co) und pigmentierte Polyethersulfon-Extrusionsformmasse (Handelsbezeichnung "Ultrason E 3000", WZ der BASF AG ) werden in getrennten Extrudern aufgeschmolzen und in einem Coextrusionsadapter zu einem dreischichtigen Strang zusammengeführt. Dieser wird in eine Extrusionsschlitzdüse eingeführt und bei 350°C in Form einer 2,5 mm dicken Bahn extrudiert, die das Polyetherimid als Kernschicht und je eine 0,3 mm dicke Deckschicht aus dem Polyethersulfon auf beiden Seiten der Kernschicht enthält. Die extrudierte Bahn wird von einem Prägekalander übernommen, wo sie geglättet bzw. auf einer Oberfläche mattiert und unter die Erweichungstemperatur gekühlt wird. Die Bahn wird mittels einer Trennvorrichtung zu Platten gewünschter Größe zerlegt.

Zum Vergleich wurde eine gleichdicke Bahn aus dem Polyetherimid allein extrudiert. An den Extrudaten wurden folgende mechanische Eigenschaften ermittelt:

| | einschichtiges Vergleichsmaterial | erfindungsgemäßes Laminat |
|---|---|---|
| Zugfestigkeit (MPa) | 110 | 110 |
| E-Modul (MPa) | 3300 | 3300 |
| Reißdehnung (%) | 29 - 46 | 90 - 105 |
| Gardner-Schlagzähigkeit (J) | ca. 1 | > 18 |
| OSU-Brandtestwerte | | |
| HR (kW min/$m^2$) | 9 - 22 | 12 - 19 |
| HRR (kW/$m^2$) | 72 - 76 | 73 - 77 |

### Ausführungsbeispiel 2

Ein dreischichtiges Laminat und ein einschichtiges Vergleichsmaterial werden wie im Ausführungsbeispiel 1 hergestellt, jedoch wird anstelle des Polyetherimids dessen Gemisch mit einem Poly-(Imid-Siloxan)-Blockcpoloymer eingesetzt. Dieses Gemisch ist unter der Bezeichnung "Ultem 1668" (WZ der General Electric Co) im Handel.

An den Extrudaten wurden folgende mechanische Eigenschaften ermittelt:

| | einschichtiges Vergleichsmaterial | erfindungsgemäßes Laminat |
|---|---|---|
| Zugfestigkeit (MPa) | 90 - 100 | 97 |
| E-Modul (MPa) | 3300 | 3300 |
| Reißdehnung (%) | 19 - 39 | 67 |
| Gardner-Schlagzähigkeit (J) | > 18 | > 18 |
| OSU-Brandtestwerte | | |
| HR (kW min/$m^2$) | 0 - 30 | 9 - 19 |
| HRR (kW/$m^2$) | 17 - 55 | 29 - 37 |

**Patentansprüche**

1. Kunststoff-Laminat, gekennzeichnet durch eine Kernschicht aus einem aromatischen Polyetherimid oder dessen Gemisch mit höchstens 40 Gew.-% eines damit verträglichen thermoplastischen Polymermaterials und beiderseits der Kernschicht haftend verbundenen Deckschichten aus einem aromatischen Polyethersulfon.

2. Kunststoff-Laminat nach Anspruch 1, dadurch gekennzeichnet, daß die Kernschicht als mit dem Polyetherimid verträgliches thermoplastisches Polymermaterial ein aromatisches Polycarbonat oder ein aromatisches Poly-(Imid-Siloxan)-Blockcopolymer enthält.

3. Kunststoff-Laminat nach Anspruch 1 oder 2, dadurch gekennzeichnet, daß die Kernschicht eine gleichmäßige Dicke von 1 bis 3 mm und die Deckschichten gleichmäßige Dicken von 0,05 bis 0,5 mm, vorzugsweise 0,2 bis 0,5 mm haben.

4. Kunststoff-Laminat nach einem oder mehreren der Ansprüche 1 bis 3, dadurch gekennzeichnet, daß die Oberfläche wenigstens einer der Deckschichten eine Mattstruktur aufweist.

5. Kunststoff-Laminat nach Anspruch 4, dadurch gekennzeichnet, daß es eine dreidimensional geformte Gestalt hat.

6. Verfahren zur Herstellung eines Kunststoff-Laminats nach einem oder mehreren der Ansprüche 1 bis 4, dadurch gekennzeichnet, daß die Kernschicht und die Deckschichten gemeinsam durch Coextrusion erzeugt und haftend miteinander verbunden werden.

7. Verfahren nach Anspruch 6, dadurch gekennzeichnet, daß die extrudierte Bahn auf einem Prägekalander mit einer Oberflächenstruktur versehen wird.

8. Verfahren nach Anspruch 6 oder 7, dadurch gekennzeichnet, daß das Kunststoff-Laminat nach der Coextrusion bei einer Temperatur von 270 bis 300°C zu einer dreidimensional geformten Gestalt umgeformt wird.

Europäisches Patentamt

# EUROPÄISCHER RECHERCHENBERICHT

Nummer der Anmeldung

EP 91111465.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| A | EP - A2/A3 - 0 232 441 (AMOCO) * Seite 5, Zeilen 9-24; Seite 54, Zeilen 4-9 * -- | 1-3,5 6,8 | B 32 B 27/08<br>B 32 B 31/30 |
| A | EP - A2/A3 - 0 198 337 (GENERAL ELECTRIC) * Seite 16, Zeilen 5-23; Seite 18, Zeilen 23-30 * -- | 1-3,5, 6,8 | |
| A | DE - C2 - 2 411 588 (CROWN) * Spalte 1, Zeilen 20-53 * ---- | 4,7 | |

RECHERCHIERTE SACHGEBIETE (Int. Cl.5)

B 32 B 27/00
B 32 B 31/00

Der vorliegende Recherchenbericht wurde für alle Patentansprüche erstellt.

| Recherchenort | Abschlußdatum der Recherche | Prüfer |
|---|---|---|
| WIEN | 12-08-1991 | ONDER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82